# EUROPEAN PATENT SPECIFICATION

(11) **EP 0 401 818 B1**
(45) Date of publication and mention of the grant of the patent: **11.10.1995**
(21) Application number: 90110800.1
(22) Date of filing: 07.06.1990
(51) Int. Cl.: H02P 7/00

(54) **A current controller and method for a DC motor**
Stromsteuerungsgerät und Methode für einen Gleichstromtor
Une commande de courant et méthode pour un moteur à courant continu

(30) Priority: 07.06.1989 JP 142958/89
(43) Date of publication of application: 12.12.1990
(73) Proprietor: HITACHI, LTD., Chiyoda-ku, Tokyo 100 (JP)
(72) Inventor: Futami, Motoo, Hitachi-shi (JP); Endo, Tunehiro, Hitachiota-shi (JP); Notohara, Yasuo, Hitachi-shi (JP); Kitayama, Tooru, Shimotsuga-gun, Tochigi-ken (JP)
(74) Representative: Altenburg, Udo, Dipl.-Phys.

(56) References cited:
- EP-A- 0 264 728
- DE-A- 3 840 540
- US-A- 4 544 868
- ELECTRONICS & WIRELESS WORLD. vol. 85,
- no. 1517, January 1979, SUTTON GB page 50 K.R.Srinivasa Murthy: "Programmable duty-cycle frequency divider"

## Description

### CURRENT CONTROLLER AND CURRENT CONTROL METHOD

### BACKGROUND OF THE INVENTION

This invention relates to a current controller and to a current control method according to the preambles of claims 1 and 12 respectively.

In the conventional current control for a motor, as disclosed in, for example, Japanese Patent laid-open Publication 39892/1986 and US-Patent 4,544,868, a reference voltage and a taken-in voltage proportional to the current flowing in the motor are compared with each other by a comparator, and when the taken-in voltage exceeds the reference voltage, the current is stopped from flowing, thereafter the current being again flowed in the motor after a constant time; that is, the current in the motor is interrupted timely by an analog circuit using the comparator, resistors and capacitors.

The conventional current controller, which is formed of the comparator, resistors and capacitors, is changed in its performance by temperature change and so on, needs the adjustment and is very complicated in its construction because of a plurality of elements. Moreover, when the conventional current controller is tried to realize by a microcomputer, a problem of the delay due to the conversion time and sampling time in the analog-digital convertor will reduce the performance or disable the control.

### BACKGROUND OF THE INVENTION

One object of this invention is to provide a current controller for motor and a control method therefor wherein the current control is performed by use of a microcomputer so as to reduce the variation of the control performance of resistors, capacitors, a comparator and so on, the current control can be made to match other control, or speed control or position control for motor by executing a small number of processes in the microcomputer, and there is no effect of the delay due to sampling, analog-digital conversion and so on.

Another object of this invention is to provide a controller for motor in which the current flowing during the pulse period of a pulse width modulation signal within a commutation period is made coincident with the risen state of a current obtained from a current command value at each pulse period, and in order to achieve a stable control performance, a microcomputer is used, but the processing time therein is shorted so that the current control can be made to match other control, or the speed control or position control of the motor, also there being no influence of delay due to sampling, analog-digital conversion and so on.

Still another object of this invention is to provide a controller for motor wherein the current control can be always satisfactorily performed irrespective of the state of the motor by modifying the variables included in the motor model means which is realized in the microcomputer so that it coincides with the actual motor.

Further object of this invention is to provide an air blower which can be always driven at a constant torque and with low vibration by changing the speed of the rise of the current in accordance with the circulating current caused upon commutation in order to reduce the torque variation of the motor for driving the blower which variation is caused in association with the commutation.

In order to achieve the above objects, according to this invention, there is provided a current controller as defined in claim 1.

Further advanteous embodiments of a current controller according to the invention are defined in claims 2-9. An air-conditioner, an air-cleaner and a current control method according to the invention are defined in claims 10-12.

### BRIEF DESCRIPTION OF THE DRAWINGS

Fig. 1A is a block diagram of one embodiment of a current controller of this invention;
Fig. 1B is a waveform diagram of the currents flowing in the circuits shown in Fig. 1A;
Fig. 2 is a block diagram of a second embodiment of a current controller for motor of this invention;
Fig. 3 is a block diagram of a third embodiment of a current controller for motor of this invention;
Fig. 4 is a diagram useful for explaining the principle of the operation of the current controller shown in Fig. 3;
Fig. 5 is a block diagram of a fourth embodiment of a current controller for motor of this invention;
Fig. 6 is a block diagram of a motor controller of a fifth embodiment of this invention;
Fig. 7 is a block diagram of a sixth embodiment of a current controller for a compressor drive motor of this invention;
Fig. 8 is a conceptional diagram of the motor model means shown in Fig. 7;
Fig. 9 is a block diagram of the motor model means of a seventh embodiment of this invention;
Fig. 10 is a diagram useful for explaining the operation of the mode means shown in Fig. 9;
Fig. 11 is a block diagram of the motor model means of an eighth embodiment of this invention;
Fig. 12 is a diagram useful for explaining the operation of the model means shown in Fig. 11;
Fig. 13 is a block diagram of a motor controller of a ninth embodiment of this invention;
Fig. 14 is a waveform diagram useful for explaining the operation of the ninth embodiment of this invention;
Fig. 15A is a block diagram of the calculator unit of the pulse width modulation signal output unit used in the embodiment shown in Fig. 13; and
Fig. 15B is a waveform diagram of the synchronizing signals in the elements of the calculator unit shown in Fig. 15A.

### DESCRIPTION OF THE PREFERRED EMBODIMENTS

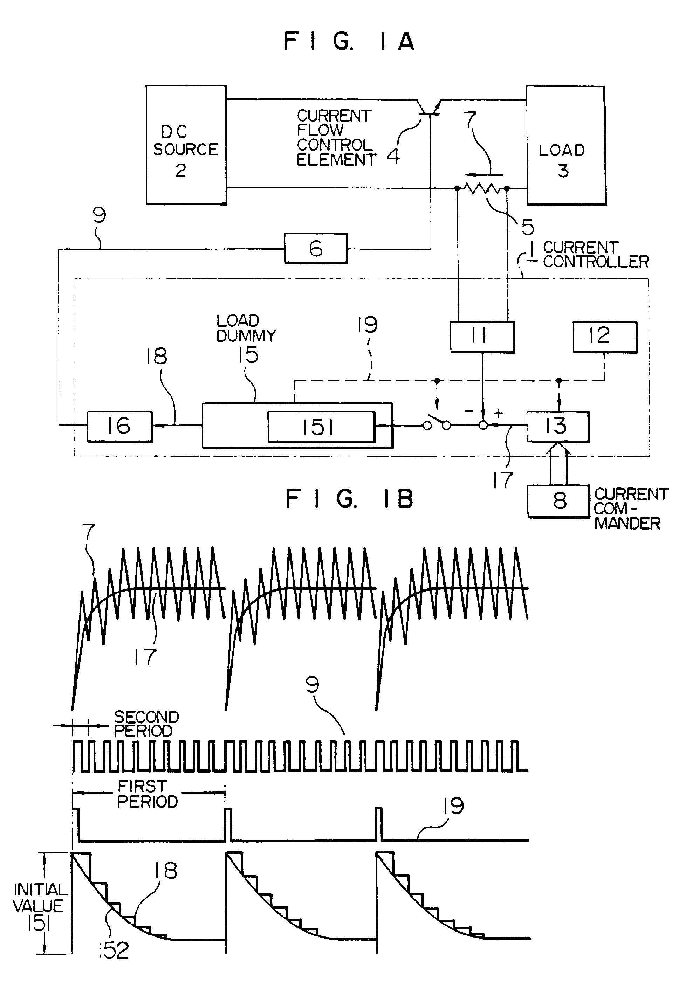

One embodiment of this invention will be described with reference to Figs. 1A and 1B.

The first embodiment of this invention is concerned with a current controller which makes a current response of the repetition of the same pattern to a load.

That is, Fig. 1A shows the whole arrangement and operation of a DC controller 1 for controlling the DC current to the load.

A DC current source 2 supplies a DC current 7 through a current flow control element 4 to a load 3.

The current controller 1 detects the voltage developed across a current detection resistor 5, and supplies a pulse width modulated signal 9 to a driver 6 so that the DC current 7 coincides in average with a current command from a current commander 8. The driver 6 controls the current flow control element 4 to pass the current to the load only when the pulse is on.

The DC current 7, as shown in Fig. 1B, repeats a constant period (first period) during which it rises from zero to a command value.

The current controller 1 comprises a timing generator 12, a current detector 11, an assumed response generator 13, a load model 15 having an initial value 151 and which determines a change of current flow rate by computation using the initial value and thereby generates scattered flow rates in each second period, and a pulse width modulation signal generator 16.

The timing generator 12 generates a timing signal 19 at each constant period (first period), thereby initializing the assumed response generator 13 and the load model 15 and permitting the initial value 151 of the load model 15 to be modified.

The assumed response generator 13, when initialized by the timing generator 12, generates an assumed response 17 which rises from zero to the command value as shown in Fig. 1B. The error between the assumed response 17 and the detected current which is detected at least once in the pulse width modulation signal period is accumulated until the next timing signal is generated (during the first period), and the initial value 151 of the load model 15 is modified using the accumulated value of the error at each timing signal.

The load model 15 has a readable memory element which has stored therein a time function 152 obtained from an input-output relation for determining the response of the load on a time basis, and generates a current flow rate 18 at each second period from this function and the initial value 151 in accordance with the time lapse after the generation of each timing signal.

The pulse width modulation signal generator 16 generates the pulse width modulation signal 9 having a given current flow rate as shown in Fig. 1B.

Thus, by repeating the modification of the initial value 151 of the load model using the accumulated value of the error within the first period, it is possible to realize the DC current 7 which coincides in average with the assumed response 17.

This embodiment of the invention has the effect of realizing the periodical response repeating current which agrees with an arbitrary assumed response.

Moreover, this embodiment has the effect that the current controller 1 can be revalized by use of a microcomputer and remove the influence of delay due to the sampling.

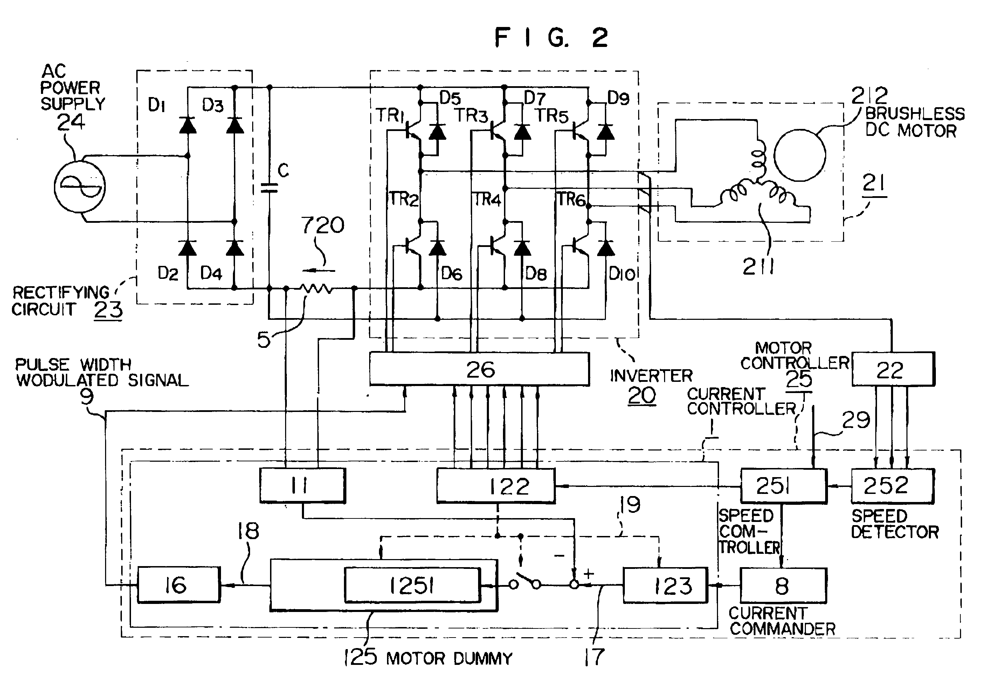

A second embodiment of this invention will be described with reference to Fig. 2. Fig. 2 shows the current controller 1 for a 120-degree current flow type inverter 20.

The alternating current from an AC power supply 24 is rectified by a rectifying circuit 23 formed of diodes D1 to D4, and smoothed by a capacitor C into a DC current relative to the inverter 20. This inverter 20 is a 120-degree current flow type inverter which is formed of transistors TR1 to TR6 and circulation diodes D5 to D10. The AC output voltage therefrom is controlled by the fact that the current flow period (120 electrical angles) of the transistors TR1, TR3, TR5 on the positive potential side of the DC voltage is chopped by the pulse width modulation. Also, the current detection resistor 5 is connected between the common emitter terminal of the transistors TR2, TR4, TR6 and the common anode terminal of the circulation diodes D6, D8, D10.

Shown at 21 is a brushless DC motor which is a four-pole synchronous motor having a permanent magnet 212 for magnetic field. The winding current flowing in an armature winding 211 is also flowed in the current detection resistor 5, and thus the winding current, 720 can be detected from the voltage drop developed across the resistor 5.

A motor controller 25 is formed by a microcomputer and can make the following operation.

That is, a magnetic pole position detecting circuit 22 formed of filter circuits generates position detected signals corresponding to the position of the rotor by utilizing the voltages induced in the three-phase winding. The position detected signals are changed twelve times during each revolution because of use of the three-phase four-pole motor. In the motor controller 25, the position detected signals are observed, and the time interval between the occurring changes of the position detected signals is measured and compensated for the delay in the filters by a speed detector 252, so that the speed is detected.

A speed controller 251 supplies to the current commander 8 an amount of modification according to the difference between a speed command 29 from the external and the speed measured by the speed detector 252. Also, this speed controller 251 supplies to a current flow controller 122 an amount of time for a current flow mode or the time corresponding to the 60 electrical angles, in accordance with the measured speed.

Thus, the current flow mode of the inverter is controlled on and off in accordance with the rotation speed, and the current command is produced for driving the motor at the rotation speed matched with the speed command 29.

The current controller 1 is substantially of the same construction as in Fig. 1.

When the motor using the 120-degree current flow type inverter is driven by this motor controller 25, the DC current 720 has the same waveform 7 as shown in Fig. 1B, which repeats each current flow mode switching period. Thus, the timing generator can be replaced by the current flow controller 122, which thus generates the timing signal 19 for initializing each element at the time of switching the current flow mode on and off.

The elements of the current controller 1, or a motor current assumed response generator 123, a motor model 125 and a motor model initial value 1251, are determined by giving the winding resistance, winding inductance and induced voltage constants of the motor. The current controller 1 including these elements produces the pulse width modulation signal 9 on the same principle as in Fig. 1.

The driver, 26 can make the chopping operation by modulating part of the current flow signal from the current flow controller 122 by the pulse width modulation signal 9.

According to the second embodiment, the DC current to be supplied to the 120-degree current flow type inverter which is switched on and off in the current flow mode at each 60 electrical degrees can be made coincident with the command value within the commutation period and with an arbitrary assumed response.

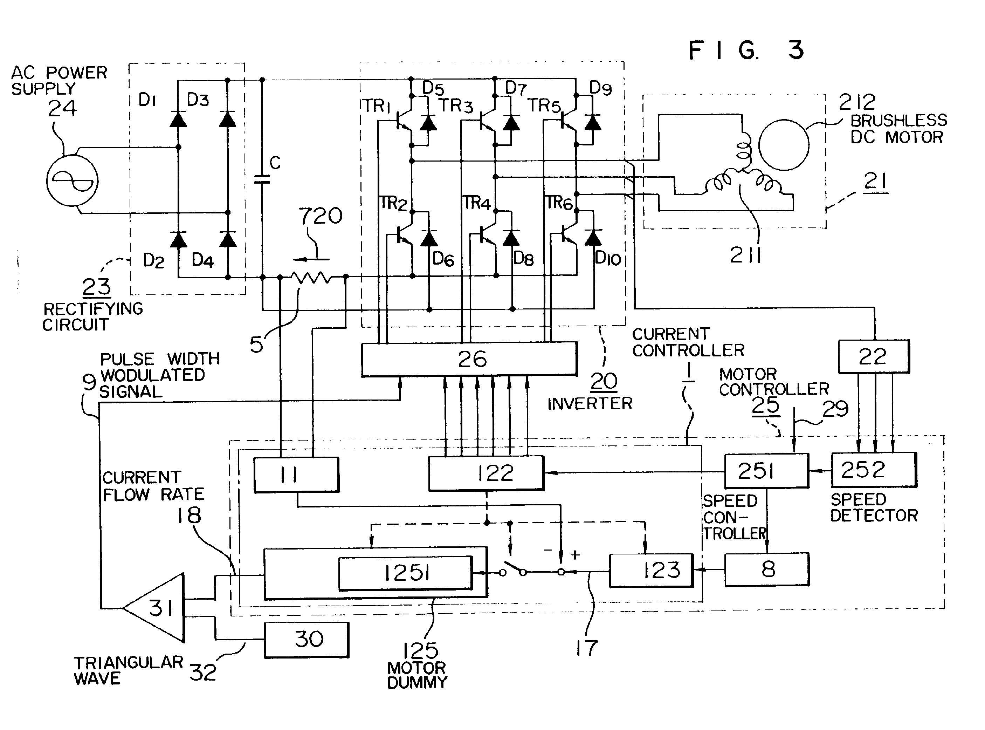

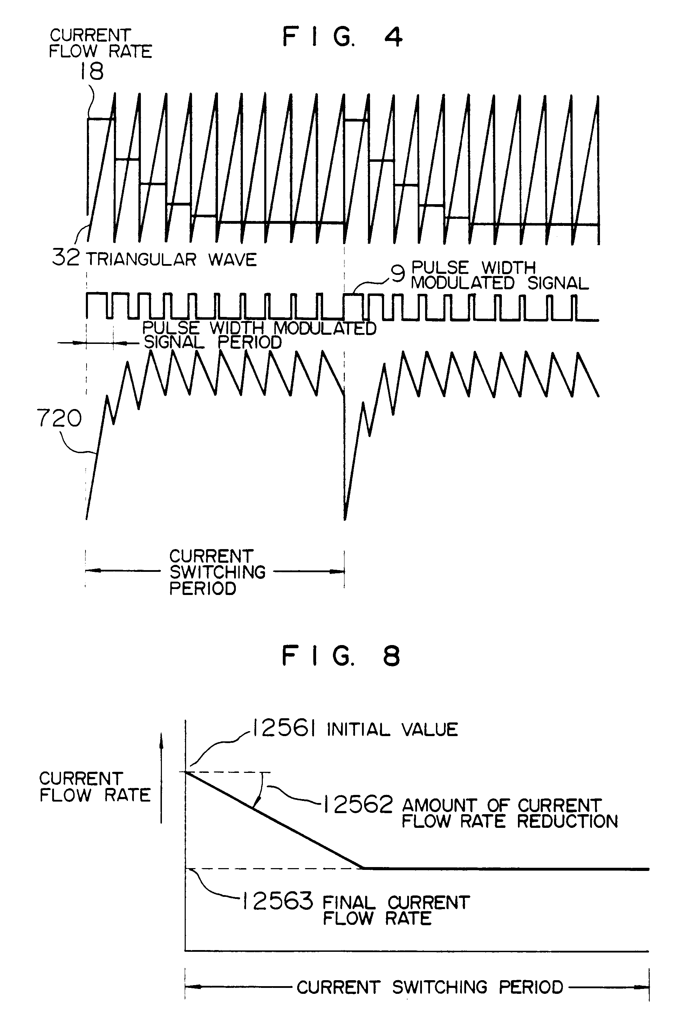

A third embodiment of this invention will be described with reference to Figs. 3 and 4. Fig. 3 shows the third embodiment for the current control of the 120-degree current flow type inverter.

In Fig. 3, like elements corresponding to those in Fig. 2 are identified by the same reference numerals.

In the third embodiment of this invention, the motor controller 25 produces the current flow rate 18 at its output.

Shown at 30 is a triangular wave generator, which generates a triangular wave 32 having a constant period.

The current flow rate 18 and the triangular wave 32 are compared with each other by a comparator 31. When the current flow rate is larger than the triangular wave, the pulse width modulated signal 9 is turned on.

Fig. 4 shows these waveforms. The pulse width modulation signal 9 controls the inverter 20 to be supplied with a DC current 720 as shown in Fig. 4.

According to the third embodiment, there is no need to produce in real time the pulse width modulation signal by the microcomputer, the current flow rate can be changed substantially in synchronism with the triangular wave, and the current control can be realized by the microcomputer with no function to generate the pulse width modulation signal.

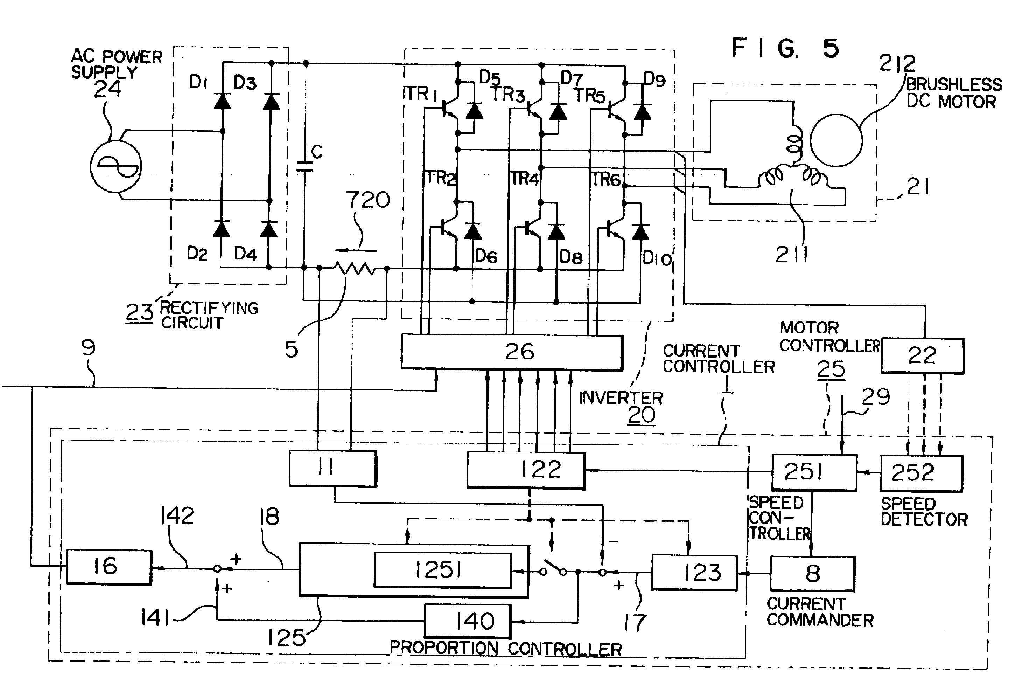

A fourth embodiment of this invention will be described with reference to Fig. 5. Fig. 5 shows the fourth embodiment for the current control to the 120-degree current flow type inverter.

In Fig. 5, like elements corresponding to those in Fig. 2 are identified by the same reference numerals. In this embodiment, a proportion controller 140 is connected in parallel with the motor model 125.

The proportion controller 140, when the DC current is detected by the current detector 12, produces an amount of modifying the current flow rate 141 by use of the error between the detected current and the assumed response at this time point, thereby modifying the current flow rate 18 which is produced from the motor model 125. This modification is made as soon as possible after the current detection.

The fourth embodiment has the effect to suppress the nonsynchronous external disturbance and sudden external disturbance in the commutation period.

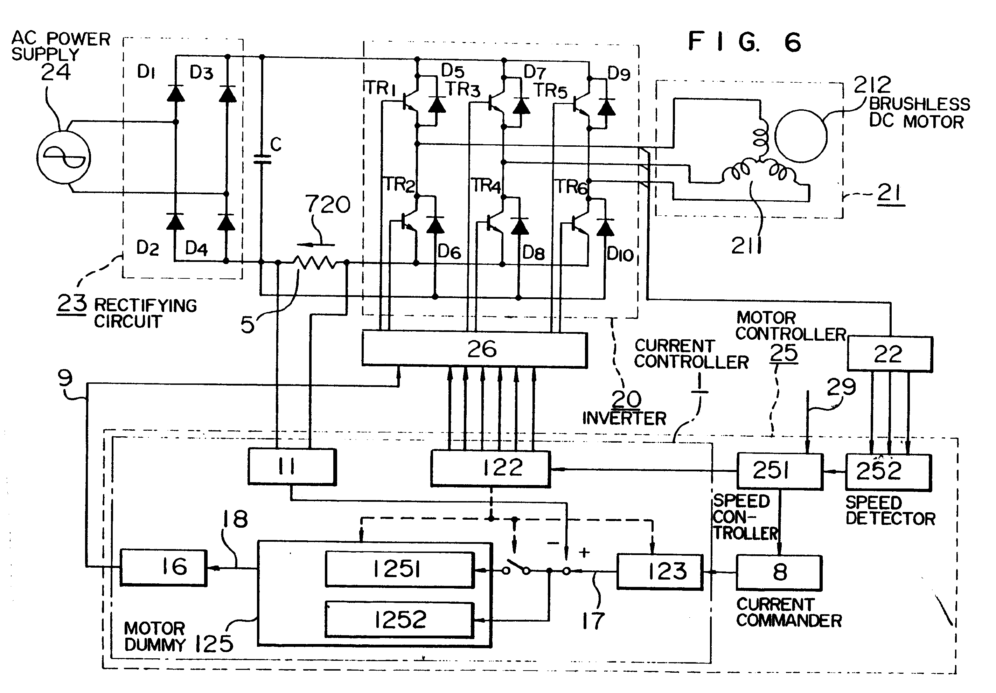

A fifth embodiment of this invention will be described with reference to Fig. 6. Fig. 6 shows the fifth embodiment for the current control to the 120-degree current flow type inverter.

In Fig. 6, like elements corresponding to those in Fig. 2 are identified by the same reference numerals.

In this embodiment, the motor model means 125 has the initial value 1251 and one parameter 1252. The current flow rate 18 just before being produced is multiplied by this parameter.

The parameter 1252, when the DC current is detected by the current detector 11, is modified by the error between the detected current and the assumed response 17 at this time point. This modification is made as soon as possible after the current detection.

The fifth embodiment has the effect to suppress the nonsynchronous external disturbance and sudden external disturbance in the commutation period.

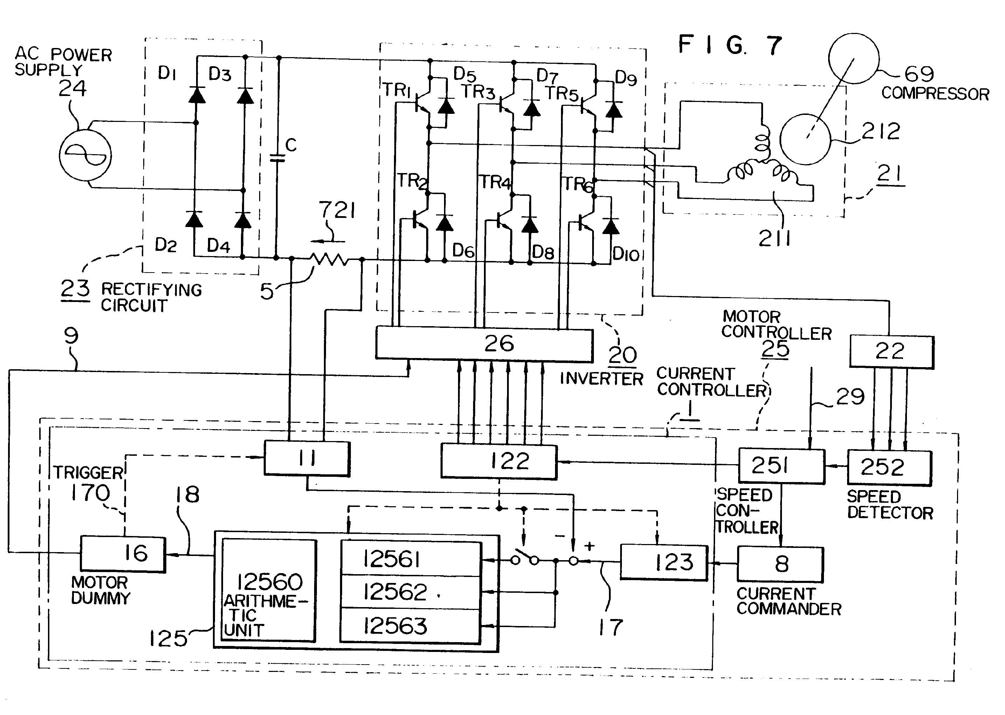

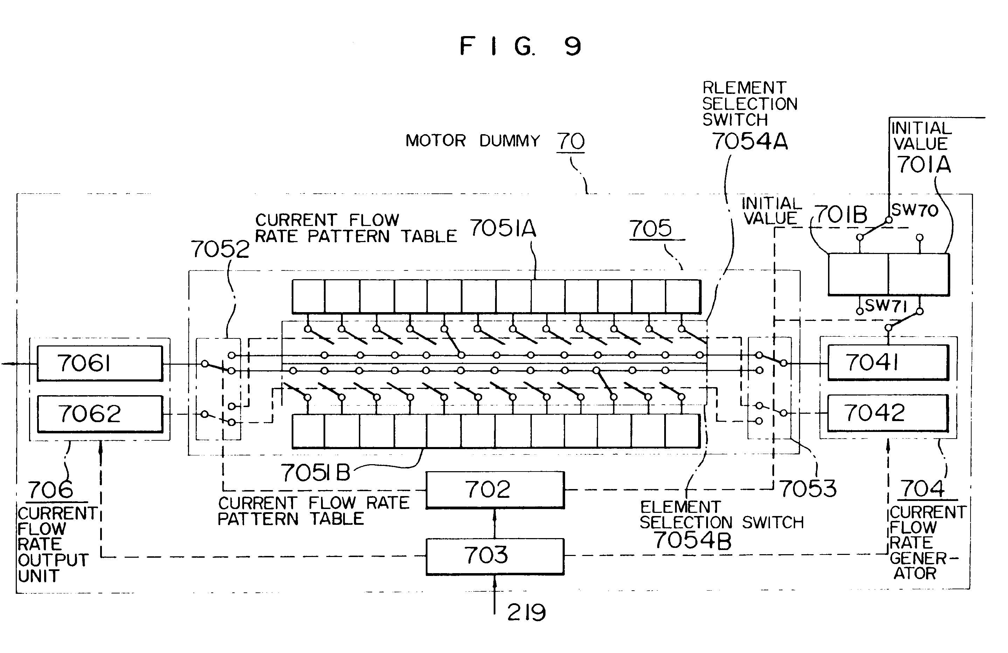

A sixth embodiment of this invention will be described with reference to Figs. 7 and 8. Fig. 7 shows the sixth embodiment for the current control to the 120-degree current flow type inverter. In Fig. 7, like elements corresponding to those in Fig. 2 are identified by the same reference numerals.

In the sixth embodiment, the load on the motor 21 is a compressor 69. The common anode terminal of the circulation diodes D6, D8, D10 on the low potential side of the inverter 20 are directly connected to the common emitter terminal of the transistors TR2, TR4, TR6. Therefore, the circulation current, or the current flowing in the diodes D6, D8 and D10 cannot be detected by the current detection resistor 5. Also, the current during the time in which the transistors TR1, TR3, TR5 on the positive potential side are all in the off state cannot be detected because it is not flowed in the current detection resistor 5.

The motor controller 25 is of the same construction as shown in Fig. 2.

Since the current detector 11 takes part of the winding current flowing through the current detection resistor 5, the current detection is made by once obtaining a trigger 170 during the time in which the pulse width modulation signal from the pulse width modulation signal generator 16 is in the on-state.

The motor model 125 has three amounts of modification; an initial value 12561, an amount of parameter current flow rate reduction 12562 and a final flow rate 12563. Fig. 8 shows the relation between the amounts of modification and the current flow rate. A calculator unit, 12560 generates the current flow rate with respect to time after commutation by use of the initial value 12561 and the parameters 12562 and 12563.

The modification of the initial value 12561 is made in accordance with the difference between the current detected value and the assumed response within one commutation period.

The amount of current flow rate reduction 12562 of the parameters is modified in accordance with the error between the speed of rise of current and that of assumed model up to the second pulse of the pulse width modulation signal after commutation.

The other parameter, or the final flow rate 12563 is modified in accordance with the error in the current value detected immediately before the commutation.

The sixth embodiment has the effect that the current control can be made in accordance with the change of the state of the compressor as the load and the change of constants of the motor.

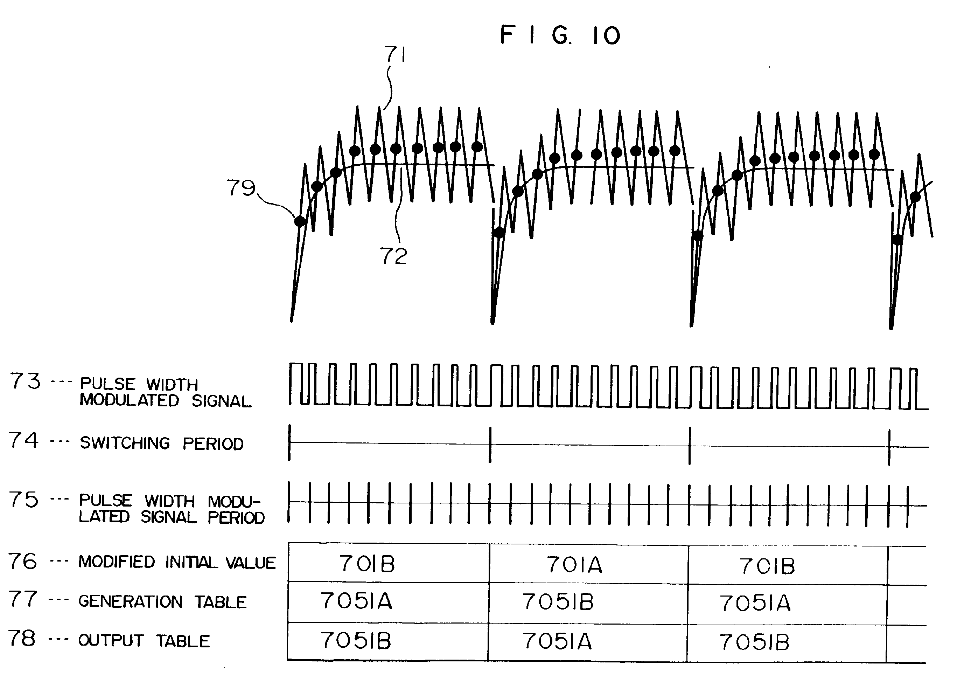

A seventh embodiment of this invention will be mentioned with reference to Figs. 9 and 10. Fig. 9 shows the motor model in which two current flow rate pattern tables 7051A and 7051B and two initial values 701A and 701B are provided.

The initial values 701A and 701B are memory elements capable of reading and writing, which are alternately switched modification to make and reading at each 60 electrical angles by switches SW 70 and SW 71.

A flow rate generator 704 comprises a calculator unit 7041 and a memory element selector 7042. The flow rate data calculated using the initial value by the calculator unit 7041 are sequentially stored in a selected one of the current flow rate pattern tables 7051A, 7051B as memory elements capable of reading and writing, which selection is made by the memory element selector 7042. This sequential storing in the tables is made by element selection switches 7054A and 7054B, respectively.

A current flow rate output unit 706 comprises an output unit 7061 and a memory element selector 7062. Data of memory elements sequentially selected by the memory element selector 7062 at each period of the pulse width modulation signal are produced through the output unit 7061.

A table switcher 702 is responsive to a current switching timing signal generated from a timing generator 703 to control input and output table changeover switches 7052, 7053 and the switches SW70, SW71 for switching the initial values to operate.

This operation will be described with reference to Fig. 10.

A pulse width modulation signal 73 is sequentially produced from an output table 78 as a selected current flow rate pattern table. The output of the modulation signal is produced by sequentially switching the memory elements at each period of the pulse width modulation signal 75.

The error between a detected value 79 of a DC current 71 flowed by the pulse width modulation signal and an assumed response 72 is accumulated as an modified initial value 76.

The current flow rate pattern is stored in the selected table of one current flow rate table, or generation table 77. The initial value used in the current flow rate table generation is not selected as the modified initial value.

The writing operation to the generation table is sequentially made at a high speed irrespective of the period of the pulse width modulation signal.

The modified initial value and generation/output table are alternately switched at each commutation period.

The seventh embodiment has the effect that the current flow rate is produced at a high speed at each period of the pulse width modulation signal.

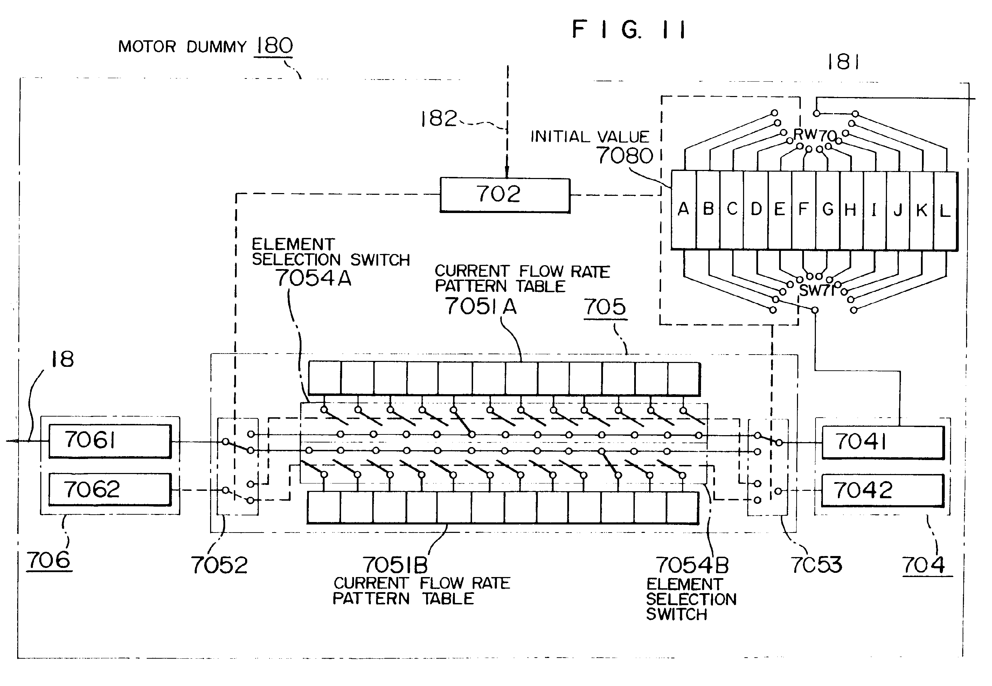

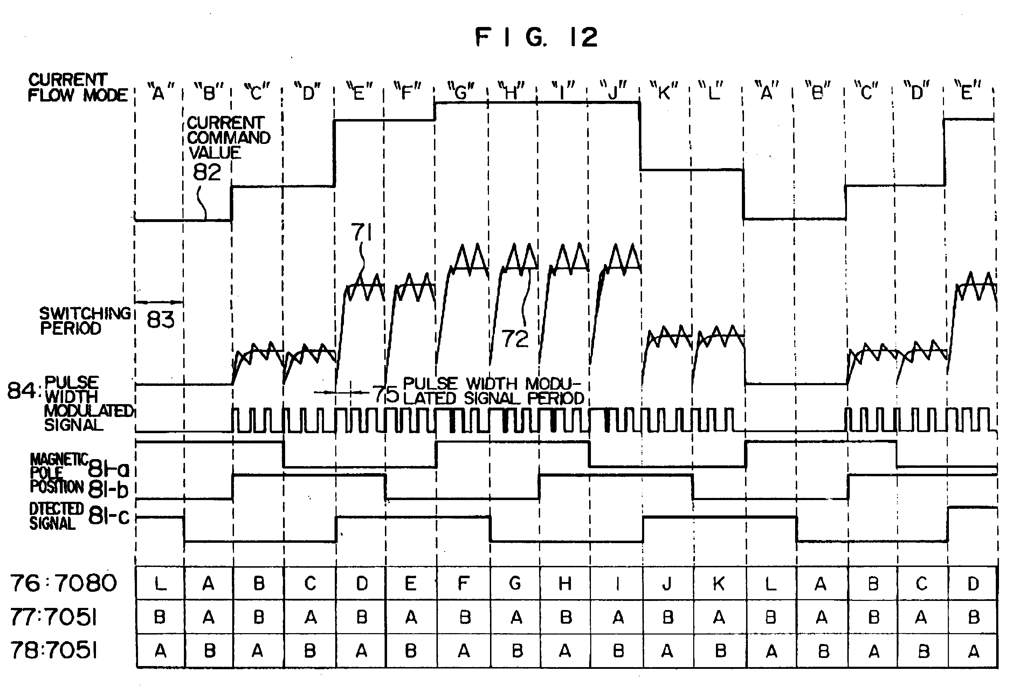

An eighth embodiment of the invention will be described with reference to Figs. 11 and 12. Fig. 11 shows a motor model 180 which has 12 initial values 7080 associated with the magnetic pole position detected modes during one revolution of the three-phase 4-pole motor, and thus which is different in that point from the motor model shown in Fig. 9. In Fig. 11, like elements corresponding to those in Fig. 9 are identified by the same reference numerals.

The selection of the generation table 77 and the output table 78 of the current flow rate table is made by the same procedure as in Fig. 9.

The method of selecting the initial values 7080 will be mentioned with reference to Fig. 12 which is a diagram for explaining the operation.

Three-phase magnetic pole position detected signals 81a, 81b and 81c are changed 12 times during one revolution of the motor, and thus there are 12 current flow modes, "A" to "L" corresponding to the motor rotation positions.

The initial values 7080 are modified after the corresponding current flow mode of 60 electrical angles (commutation period) 83.

The flow rate pattern table is generated by use of the initial value corresponding to the current flow mode next to the flow mode at that time.

For example, in the current flow mode "C", the initial value 7080B is modified by use of the controlled result in the current flow mode "B". On the other hand, the current flow rate pattern table 7051B is generated by use of the initial value 7080D.

The pulse width modulation signal is produced in accordance with the current flow rate pattern table 7051A generated by use of the initial value 7080C in the current flow mode "B".

The eighth embodiment has the effect that a command value different at each 60 electrical angles can be realized by independent current control at each revolutional position of the motor.

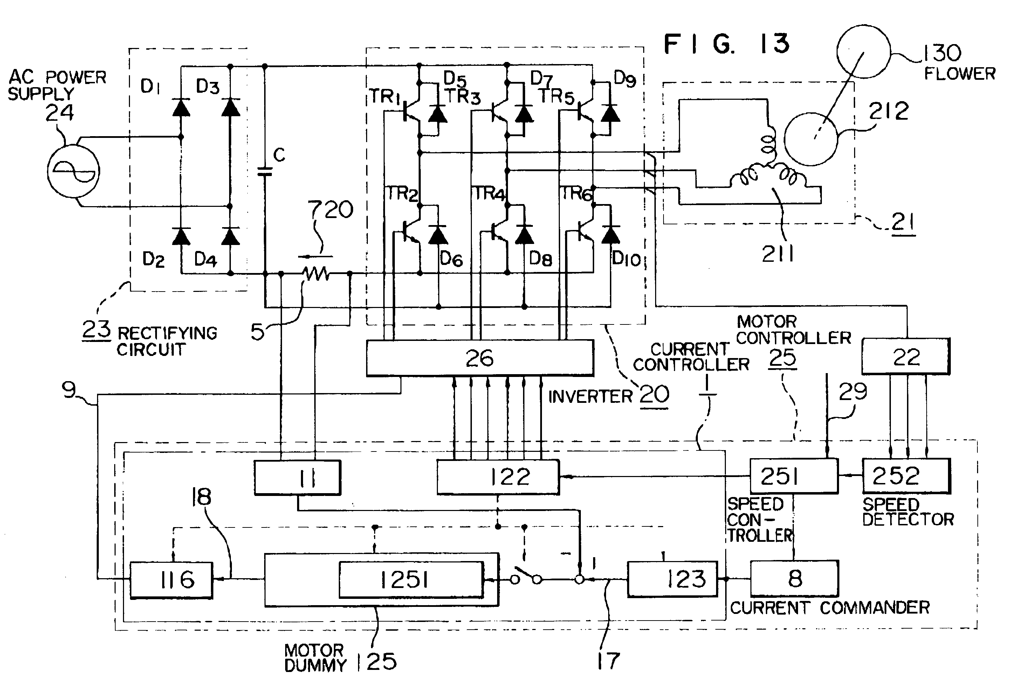

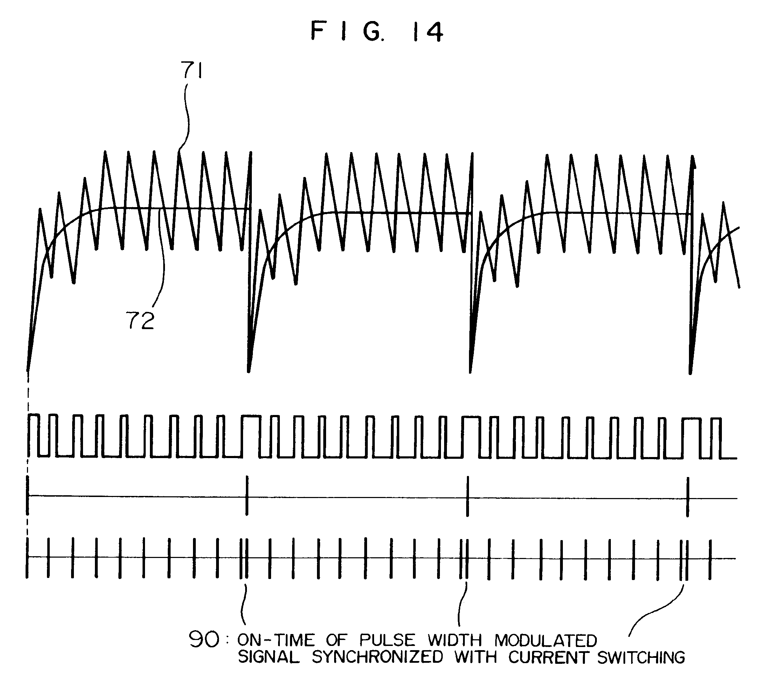

A ninth embodiment of this invention will be described with reference to Figs. 13 and 14. Fig. 13 shows the ninth embodiment for the current control to the 120-degree current flow type inverter. In Fig. 13, like elements corresponding to those in Fig. 2 are identified by the same reference numerals.

In the ninth embodiment, the load on the motor is an air blower 130, and the pulse width modulation signal generator 16 is initialized at each commutation timing signal.

This situation will be mentioned with reference to Fig. 14 which is a diagram for explaining the operation. The pulse width modulation signal with the constant pulse width modulation signal period 75 is produced which turns zero at the commutation point.

The commutation period 74 is changed in accordance with the rate of revolution of the motor irrespective of the pulse width modulation signal. When the commutation is caused as at 90 in Fig. 14, the pulse width modulation signal is initialized so that it is always on at the time of commutation.

Thus, the DC current 71 indicates the average value coincident with the assumed response 72, not depending on the timing of the commutation.

The ninth embodiment has the effect that a constant response coincident with the assumed response can be realized for all rates of revolution, and thus the effect to reduce the fluctuation of the rotation of the air blower.

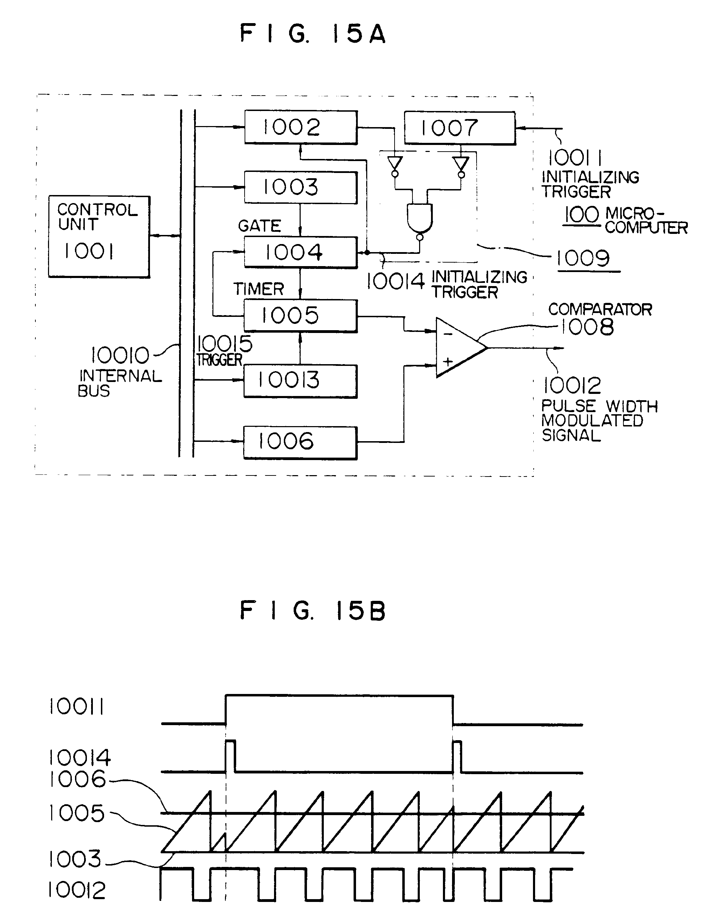

A tenth embodiment of this invention will be described with reference to Fig. 15. Fig. 15 shows an example of the pulse width modulation signal generator for producing the pulse width modulation signal synchronized with the commutation in Fig. 13. This example employs one output function of a microcomputer.

An initializing trigger 10011 is supplied to a microcomputer 100, and a pulse width modulation signal 10012 is produced therefrom.

A timer 1005 is a memory element capable of reading and writing and thus in which the value is increased or decreased at constant intervals of time. When the value of the timer exceeds the maximum or minimum value, it produces a trigger 10015, by which a gate 1004 is opened so that the initial value stored in a memory element 1003 is read in and that the counting is again started. The memory element 1003 can be controlled by a control unit 1001 through an internal bus 10010 to store an arbitrary value.

The control unit 1001 controls a memory element 10013 to store 0 or 1 through the internal bus 10010 so that a timer 1005 is set to an increase or decrease mode.

A memory element 1006 is controlled by the control unit 1001 to store a value through the internal bus 10010.

A comparator 1008 compares the value of the timer 1005 and the content of the memory element 1006. When the content of the timer 1005 is smaller than that of the memory element, the comparator 1008 turns the pulse width modulation signal 10012 off, and when the content of the timer 1005 is larger than that of the memory element, the comparator turns it on.

Thus, the pulse width modulated signal with a constant period can realize the current flow rate given by the memory element 1006.

The timer 1005 is also initialized by an initializing trigger 10014.

This initializing trigger 10014 is produced when the control unit 1001 controls the memory element 1002 to store 1 through the internal bus. This trigger can initialize the memory element 1002 into 0.

Also, the initializing trigger 10011 also causes an initializing trigger. In other words, an edge detection circuit 1007 detects the edges of the initializing trigger 10011 and produces a trigger as shown in Fig. 15B. This trigger and the trigger from the memory element 1002 controlled by the control unit 1001 are supplied to an OR circuit 1009, which selects the trigger signals, by which the gate 1004 is opened, permitting the initial value of the memory element 1003 to be supplied therethrough to the timer 1005. Thus, the pulse width modulation signal is initialized at the time of the trigger generation.

According to the tenth embodiment, since the pulse width modulation signal having an arbitrary pulse width is produced not through the software of the microcomputer, and since this signal can be simply initialized, the pulse width modulation signal can be produced without interrupting other processings.

Therefore, since periodical DC current control can be realized only by modifying the initial value at each repetitive period, using the load model which has variable initial values, the current controller can be realized without using any discrete analog circuit.

Moreover, since the time response of the motor is included as motor model means, the DC current control, when the current control is made only by a microcomputer, can be made by the detection of a little current, or by detecting current about once each period of the pulse width modulation signal, and a current matched with the command can be realized within 60 electrical angles.

Also, since the current control can be realized even without high speed output by selecting a voltage except the current flow rate as the output of the motor model means, it is possible to use the microcomputer having no pulse width modulation signal generating means together with a few discrete components such as a triangular wave generator and a comparator, for realizing the current control and arbitrary current response.

Moreover, since means is provided which causes the result of current detection to reflect the current flow rate in about two periods of the pulse width modulation signal, an external disturbance and a sudden external disturbance not synchronism with the commutation can be suppressed.

Moreover, since a parameter is provided which can be modified in accordance with the change of the response to the current rise, and since the average current and current response can be independently controlled, it is possible to make the current control according to the state change of the motor, or the change of induced voltage change and the change of constants such as the resistance of the winding.

Moreover, since the current flow rate can be obtained by a simple calculation using the initial value and the parameter, the current control by a microcomputer can be made in a short processing.

Moreover, since the modification of the initial value and that of the parameter are made by use of different amounts of state, the control of the response state can be realized together with the control of the average current.

Moreover, since the calculation of the current flow rate and the output thereof can be independently performed, the current flow rate can be previously calculated without waiting for the output, and the output thereof can be executed by a short processing.

Moreover, since independent current control can be made at each rotational position of the motor for the reason of having the initial values according to the number of current flow modes, the motor drive torque can be changed during one revolution in accordance with the load torque.

Moreover, since the commutation can be synchronized with the reference time of the pulse width modulation signal, or the time at which the pulse is on, irrespective of the rate of revolution, it is possible to realize the current which agrees with the assumed response irrespective of the rate of revolution.

Moreover, since the pulse width modulation signal can be initialized and produced not through the program of the microcomputer, it is possible to realize the current controller which can produce the pulse width modulation signal synchronized with the commutation without executing complicated processing in the program.

Moreover, since it is possible to, control the rise of the winding current which is caused by the 120-degree current flow type inverter, the motor can be controlled in speed to have less variation of drive torque. Also, since the current control can be made by a microcomputer, the current controller can be constructed to be small.

Moreover, since the current control for, independent motor drive torque at each rotational position in accordance with the load torque of the compressor can be made by a microcomputer, low-vibration driving can be realized by a small compressor-drive with a few discrete components.

Furthermore, since the current controller for the current response considering the rise upon commutation can be constructed by a microcomputer, low-vibration driving can be realized by a small blower-drive with a few discrete components.

## Claims

1. A current controller including:
modulating means (6) which employs a pulse width modulation signal having a first period in which a current change is periodically repeated, a second period periodically repeated within the first period and a plurality of pulses periodically repeating at the second period, for modulating a current flowing within said first period with said pulse width modulation signal;
detection means (5, 11) for detecting a current flowing in a load at least one time within said second period; and
means (16) for producing said pulse width modulation signal in accordance with a current flow rate (18) of the pulse width modulation in order to coincide said detected current with a command value; characterized by further comprising:
current reference generating means (13) for generating a current reference command (17) as an optimum current command waveform rising with primary delay from zero to a predetermined current command value within said first period;
load simulation means (15) for calculating said current flow rate of the pulse width modulation within said first period in accordance with an initial current flow rate (151) in said first period stored in a readable and writable memory element in order to flow a current to coincide with said current reference command; and
means for modifying the initial current flow rate of said load simulation means in accordance with a difference between said detected current and said current reference command, and generating a necessary current flow rate of the pulse width modulation at said second period in accordance with lapse of time after said first period.

2. A current controller according to Claim 1 characterized in that said load includes a motor (21) and a pulse width modulation inverter (20) for driving the motor, and said first period includes a commutation period in which the direction of current to the inverter is changed.

3. A current controller according to Claim 2 characterized in that said load model means (15) includes a time function for generating a pattern (152) of current flow rate which initiates from an initial value in accordance with lapse of time.

4. A current controller according to Claim 3 characterized in that said time function of said load model means (15) is determined by a current flow reduction rate (12562) and a final flow rate (12563). (Fig. 8)

5. A current controller according to Claim 3 characterized in that said initial value of said load model means (15) is calculated from a value of product of an assumed response and errors of a detected value within said first period.

6. A current controller according to Claim 5 characterized by further comprising means for modifying, after termination of said communication period, the initial value of said motor model means (15) in accordance with the difference between a sequence of current values detected within said terminated communication period and a sequence of assumed responses when a control output is produced within said terminated communication period.

7. A current controller according to Claim 6 characterized by further comprising modification addition means for generating sequentially necessary current flow rates in accordance with lapse of time after the commutation and adding a modification to the initial value of said load model means (15) in accordance with the difference between a detection current value detected immediately before relative to the generated current flow rates and an assumed response value corresponding to said detection current value. (Fig. 5)

8. A current controller according to Claim 2 characterized by further comprising:
two current flow rate pattern tables (7051A, 7051B) each formed of a plurality of readable and writable memory elements and which sequentially store the flow rates of the pulse width modulation signal within said commutation; and
means having at least two initial values (701A, 701B) of said motor model means, and which modifies the initial value of the motor model means in the n-th commutation period in accordance with the difference between said detected current and said assumed response before at least the (n-2)-th commutation period, stores sequentially the output from said motor model means in accordance with lapse of time after the commutation due to said initial value within the (n-1)-th commutation period, in one of said two flow rate pattern tables, and producing sequentially the flow rates associated with the (n-1)-th commutation period from the other flow rate pattern table in which said current flow rates are stored within the (n-2)-th commutation period at each output of said pulse width modulated signal. (Fig. 11)

9. A current controller according to Claim 2 characterized by further comprising:
altering means for altering the on or off time of the pulse width modulation signal in asynchronism with the pulse width modulation signal period; and
calculator means for permitting the on or off time of the pulse width modulation signal to agree with said commutation at each commutation at which the previous commutation period ends and the next commutation period starts, and determining the current flow rate in accordance with the difference between said command current and said detected current. (Fig. 14)

10. An air-conditioner characterized by including a current controller according to any one of Claims 2 to 9.

11. An air-cleaner characterized by including a current controller according to any one of Claims 2 to 9.

12. A current control method including the steps of
- employing a pulse width modulation signal having a first period in which a current change is periodically repeated, a second period periodically repeated within the first period and a plurality of pulses periodically repeating at the second period, for modulating a current flow within said first period with said pulse width modulation signal;
- detecting a current flowing in a load at least one time within said second period; and
- producing said pulse width modulation signal in accordance with a current flow rate (18) of the pulse width modulation in order to coincide said detected current with a command value;
- generating a current reference command (17) as an optimum current command waveform rising with primary delay from zero to a predetermined current command value within said first period;
- calculating said current flow rate of the pulse width modulation within said first period in accordance with an initial current flow rate (151) in said first period stored in a readable and writable memory element in order to flow a current to coincide with said current reference command; and
- modifying the initial current flow rate in accordance with a difference between said detected current and said current reference command, and generating a necessary current flow rate of the pulse width modulation at said second period in accordance with lapse of time after said first period.

## Patentansprüche

1. Stromsteuervorrichtung, die aufweist:
eine Modulationseinrichtung (6), die ein Impulsbreiten-Modulationssignal benutzt, das eine erste Periode aufweist, in der eine Stromänderung periodisch wiederholt wird, eine zweite Periode, die periodisch in der ersten Periode wiederholt ist, und eine Vielzahl von Impulsen, die sich periodisch in der zweiten Periode wiederholen, um einen Strom zu modulieren, der in der ersten Periode mit dem Impulsbreiten-Modulationssignal fließt;
Erfassungseinrichtungen (5, 11) zum Erfassen eines Stromes, der in einer Last zumindest einmal in der zweiten Periode fließt; und
Einrichtungen (16) zum Erzeugen des Impulsbreiten-Modulationssignales in Übereinstimmung mit einer Stromflußrate (18) der Impulsbreiten-Modulation, damit der erfaßte Strom mit einem Stellwert zusammenfällt;
dadurch gekennzeichnet, daß sie weiter aufweist:
eine Referenzstrom-Erzeugungseinrichtung (13) zum Erzeugen eines Referenzstromstellwertes (17) als eine optimale Wellenform eines Stromstellwertes, die mit einer Primärverzögerung von Null zu einem vorbestimmten Stromstellwert innerhalb der ersten Periode ansteigt; eine Belastungssimulationseinrichtung (15) zum Berechnen der Stromflußrate der Impulsbreiten-Modulation in der ersten Periode in Übereinstimmung mit einer anfänglichen Stromflußrate (151) in der ersten Periode, die in einem lesbaren und schreibbaren Speicherelement gespeichert ist, um einen Strom fließen zu lassen, der mit dem Referenzstromstellwert zusammenfällt; und
Einrichtungen zum Modifizieren der anfänglichen Stromflußrate der Belastungssimulationseinrichtung in Übereinstimmung mit einem Unterschied zwischen dem erfaßten Strom und dem Referenzstromstellwert und Erzeugen einer notwendigen Stromflußrate der Impulsbreiten-Modulation zu der zweiten Periode in Übereinstimmung mit der verstrichenen Zeit nach der ersten Periode.

2. Stromsteuervorrichtung gemäß Anspruch 1, dadurch gekennzeichnet, daß die Last einen Motor (21) und einen Impulsbreiten-Modulationsumrichter (20) zum Antreiben des Motors umfaßt und wobei die erste Periode eine Kommutationsperiode aufweist, in der die Richtung des Stromes zu dem Umrichter geändert ist.

3. Stromsteuervorrichtung gemäß Anspruch 2, dadurch gekennzeichnet, daß die Lastmodelleinrichtung (15) eine Zeitfunktion zum Erzeugen eines Musters (152) einer Stromflußrate aufweist, die von einem anfänglichen Wert in Übereinstimmung mit der verstrichenen Zeit startet.

4. Stromsteuervorrichtung gemäß Anspruch 3, dadurch gekennzeichnet, daß die Zeitfunktion der Lastmodelleinrichtung (15) durch eine Stromflußreduktionsrate (12562) und eine finale Flußrate (12563) (Fig. 8) bestimmt ist.

5. Stromsteuervorrichtung gemäß Anspruch 3, dadurch gekennzeichnet, daß der anfängliche Wert der Lastmodelleinrichtung (15) aus einem Produktwert einer angenommenen Antwort und Fehlern eines erfaßten Wertes innerhalb der ersten Periode berechnet wird.

6. Stromsteuervorrichtung gemäß Anspruch 5, dadurch gekennzeichnet, daß sie weiter aufeist: Einrichtungen zum Modifizieren nach dem Beenden der Kommunikationsperiode des anfänglichen Wertes der Motormodelleinrichtung (15) in Übereinstimmung mit dem Unterschied zwischen einer Folge von Stromwerten, die in der beendeten Kommunikationsperiode erfaßt worden sind, und einer Folge von angenommenen Antworten, wenn eine Steuerausgabe in der beendeten Kommunikationsperiode erzeugt worden ist.

7. Stromsteuervorrichtung gemäß Anspruch 6, dadurch gekennzeichnet, daß sie weiter eine Modifikationsadditions-Einrichtung zum Erzeugen aufeinanderfolgend notwendiger Stromflußraten in Übereinstimmung mit der verstrichenen Zeit nach der Kommutation und zum Addieren einer Modifikation zu dem anfänglichen Wert der Lastmodelleinrichtung (15) in Übereinstimmung mit dem Unterschied zwischen einem Erfassungsstromwert, der unmittelbar vorher relativ zu den erzeugten Stromflußraten erfaßt worden ist, und einem angenommenen Antwortwert, der dem Erfassungsstromwert entspricht (Fig. 5), aufweist.

8. Stromsteuervorrichtung gemäß Anspruch 2, dadurch gekennzeichnet, daß sie weiter aufweist:
zwei Stromflußraten-Mustertabellen (7051A, 7051B), die jeweils aus einer Vielzahl von lesbaren und schreibbaren Speicherelementen gebildet sind, und die sequentiell die Flußraten des Impulsbreiten-Modulationssignals innerhalb der Kommutation speichern; und
eine Einrichtung, die zumindest zwei Anfangswerte (701A, 701B) der Motormodelleinrichtung aufweist, und die den Anfangswert der Motormodelleinrichtung in der n-ten Kommutationsperiode in Übereinstimmung mit dem Unterschied zwischen dem erfaßten Strom und der angenommenen Antwort vor zumindest der (n-2)-ten Kommutationsperiode modifiziert, die sequentiell die Ausgabe von der Motormodelleinrichtung in Übereinstimmung mit der verstrichenen Zeit nach der Kommutation aufgrund des Anfangswertes innerhalb der (n-1)-ten Kommutationsperiode in einer der beiden Flußraten-Mustertabellen speichert, und sequentiell die Flußraten erzeugt, die der (n-1)-ten Kommutationsperiode von der anderen Flußraten-Mustertabelle zugeordnet sind, in der die Stromflußraten innerhalb der (n-2)-ten Kommutationsperiode bei jeder Ausgabe des Impulsbreiten-modulierten Signales gespeichert sind (Fig. 11).

9. Stromsteuervorrichtung gemäß Anspruch 2, dadurch gekennzeichnet, daß sie weiter aufweist:
Wechseleinrichtungen zum Wechseln der Ein- oder Aus-Zeit des Impulsbreiten-Modulationssignales in Asynchronismus mit der Periode des Impulsbreiten-Modulationssignales; und
eine Berechnungseinrichtung, damit der Ein- oder Aus-Zeit des Impulsbreiten-Modulationssignales erlaubt wird, mit der Kommutation bei jeder Kommutation übereinzustimmen, bei der die vorangehende Kommutationsperiode endet und die nächste Kommutationsperiode startet und zum Bestimmen der Stromflußrate in Übereinstimmung mit dem Unterschied zwischen dem Stellstrom und dem erfaßten Strom (Fig. 14).

10. Klimaanlage, die dadurch gekennzeichnet ist, daß sie eine Stromsteuervorrichtung gemäß einem der Ansprüche 2 bis 9 aufweist.

11. Luftreinigungsanlage, die dadurch gekennzeichnet ist, daß sie eine Stromsteuervorrichtung gemäß einem der Ansprüche 2 bis 9 aufweist.

12. Verfahren zum Steuern eines Stromes, das die Schritte aufweist:
- Anwenden eines Impulsbreiten-Modulationssignales, das eine erste Periode aufweist, in der eine Stromänderung periodisch wiederholt ist, eine zweite Periode, die periodisch innerhalb der ersten Periode wiederholt ist, und eine Vielzahl von Impulsen, die sich periodisch bei der zweiten Periode wiederholen, um einen Stromfluß innerhalb der ersten Periode mit dem Impulsbreiten-Modulationssignal zu modulieren;
- Erfassen eines Stromes, der in einer Last zumindest einmal in der zweiten Periode fließt; und
- Erzeugen des Impulsbreiten-Modulationssignals in Übereinstimmung mit einer Stromflußrate (18) der Impulsbreiten-Modulation, so daß der erfaßte Strom mit einem Stellwert zusammenfällt;
- Erzeugen eines Referenzstromstellwertes (17) als eine optimale Wellenform eines Stromstellwertes, die mit einer Primärverzögerung von Null auf einem vorbestimmten Stromstellwert innerhalb der ersten Periode ansteigt;
- Berechnen der Stromflußrate der Impulsbreiten-Modulation innerhalb der ersten Periode in Übereinstimmung mit einer anfänglichen Stromflußrate (151) in der ersten Periode, die in einem lesbaren und schreibbaren Speicherelement gespeichert ist, damit ein Strom fließt, der mit dem Referenzstromstellwert übereinstimmt; und
- Modifizieren der anfänglichen Stromflußrate in Übereinstimmung mit einem Unterschied zwischen dem erfaßten Strom und dem Referenzstromstellwert und Erzeugen einer notwendigen Stromflußrate der Impulsbreiten-Modulation bei der zweiten Periode in Übereinstimmung mit der verstrichenen Zeit nach der ersten Periode.

## Revendications

1. Dispositif de commande de courant comprenant :
des moyens de modulation (6) qui emploient un signal de modulation d'impulsions en durée, possédant une première période pendant laquelle une variation du courant est répétée périodiquement, une seconde période répétée périodiquement pendant la première période et une pluralité d'impulsions se répétant périodiquement pendant la seconde période, pour moduler un courant circulant pendant ladite première période avec ledit signal de modulation d'impulsions en durée;
des moyens de détection (5,11) pour détecter un courant circulant dans une charge au moins une fois pendant ladite seconde période; et
des moyens (16) pour produire ledit signal de modulation d'impulsions en durée en fonction d'un débit de courant (18) de la modulation d'impulsions en durée de manière à faire coïncider ledit courant détecté avec une valeur de commande;
caractérisé en ce qu'il comporte en outre :
des moyens de production de courant de référence (13) pour produire une commande de courant de référence (17) en tant que forme d'onde de commande de courant optimale qui augmente avec un retard principal à partir de zéro jusqu'à une valeur de commande de courant prédéterminée pendant ladite première période;
des moyens de simulation de charge (15) pour calculer ledit débit de courant de la modulation d'impulsions en durée pendant ladite première période en fonction d'un débit de courant initial (151) pendant ladite première période, mémorisé dans un élément de mémoire pouvant être lu et enregistré, de manière à faire circuler un courant de manière qu'il coïncide avec ladite commande de référence de courant; et
des moyens pour modifier le débit de courant initial desdits moyens de simulation de charge en fonction d'une différence entre ledit courant détecté et ladite commande de référence de courant et produire un débit de courant nécessaire de la modulation d'impulsions en durée pendant ladite seconde période en fonction de l'écoulement du temps après ladite première période.

2. Dispositif de commande de courant selon la revendication 1, caractérisé en ce que ladite charge comprend un moteur (21) et un inverseur (20) à modulation d'impulsions en durée pour entraîner le moteur, et ladite première période comprend une période de commutation, pendant laquelle le sens du courant envoyé à l'inverseur est modifié.

3. Dispositif de commande de courant selon la revendication 2, caractérisé en ce que lesdits moyens de modèle de charge (15) incluent une fonction du temps pour produire une configuration (152) d'un débit de courant qui démarre à partir d'une valeur initiale en fonction de l'écoulement du temps.

4. Dispositif de commande de courant selon la revendication 3, caractérisé en ce que ladite fonction de temps desdits moyens de modèle de charge (15) est déterminée par un débit de réduction de courant (12562) et un débit final (12563). (Figure 8).

5. Dispositif de commande de courant selon la revendication 3, caractérisé en ce que ladite valeur initiale desdits moyens de modèle de charge (15) est calculée à partir d'une valeur du produit d'une réponse supposée et d'erreurs d'une valeur détectée pendant ladite première période.

6. Dispositif de commande de courant selon la revendication 5, caractérisé en ce qu'il comporte en outre des moyens pour modifier, après achèvement de ladite période de communication, la valeur initiale desdits moyens de modèle de moteur (15) en fonction de la différence entre une séquence de valeurs de courant détectées pendant ladite période de communication terminée et une suite de réponses supposées, lorsqu'un signal de sortie de commande est produit pendant ladite période de communication terminée.

7. Dispositif de commande de courant selon la revendication 6, caractérisé en ce qu'il comporte en outre des moyens d'addition de modification pour produire des débits de courant nécessaires successivement, en fonction de l'écoulement du temps après la commutation, et l'addition d'une modification à la valeur initiale desdits moyens de modèle de charge (15) en fonction de la différence entre une valeur de courant de détection détectée juste avant par rapport aux débits de courant produits et pour une valeur de réponse supposée correspondant à ladite valeur de courant de détection. (Figure 5).

8. Dispositif de commande de courant selon la revendication 2, caractérisé en ce qu'il comporte en outre :
deux tables (7051A, 7051B) de configurations de débits de courant formées chacune par une pluralité d'éléments de mémoire pouvant être lus et enregistrés, et qui mémorisent successivement les débits du signal de modulation d'impulsions en durée dans ladite commutation; et
des moyens possédant au moins deux valeurs initiales (701A, 701B) desdits moyens de modèle de moteur et qui modifient la valeur initiale des moyens de modèle de moteur pendant la n-ème période de commutation en fonction de la différence entre ledit courant détecté et ladite réponse supposée avant au moins la (n-2)-ème période de commutation, mémorisent séquentiellement le signal de sortie provenant desdits moyens de modèle de moteur en fonction de l'écoulement du temps après la commutation due à ladite valeur initiale pendant la (n-1)-ème période de commutation, dans l'une desdites deux tables de configurations de débits, et produisant séquentiellement les débits associés à la (n-1)-ème période de commutation à partir de l'autre table de configurations de débits, dans laquelle lesdits débits de courant sont mémorisés pendant la (n-2)-ème période de commutation sur chaque sortie dudit signal modulé selon une modulation d'impulsions en durée. (Figure 11).

9. Dispositif de commande de courant selon la revendication 2, caractérisé en ce qu'il comporte en outre :
des moyens de modification servant à modifier le temps d'application ou d'interruption du signal de modulation d'impulsions en durée d'une manière asynchrone par rapport à la période du signal de modulation d'impulsions en durée; et
des moyens de calcul pour permettre que le temps d'application ou l'interruption du signal de modulation d'impulsions en durée concorde avec ladite commutation lors de chaque commutation lors de laquelle la période de commutation précédente se termine et la période de commutation suivante se commence, et déterminer le débit de courant en fonction de la différence entre ledit courant de commande et ledit courant détecté. (Figure 14).

10. Climatiseur caractérisé en ce qu'il comporte un dispositif de commande de courant selon l'une quelconque des revendications 2 à 9.

11. Filtre à air caractérisé en ce qu'il comporte un dispositif de commande de courant selon l'une quelconque des revendications 2 à 9.

12. Procédé de commande de courant comprenant les étapes consistant à
- utiliser un signal de modulation en durée possédant une première période, pendant laquelle une variation de courant est répétée périodiquement, une seconde période répétée périodiquement pendant la première période et une pluralité d'impulsions se répétant périodiquement pendant la seconde période, pour moduler un flux de courant pendant ladite première période à l'aide dudit signal de modulation d'impulsions en durée;
- détecter un courant circulant dans une charge au moins une fois pendant ladite seconde période; et
- produire ledit signal de modulation d'impulsions en durée en fonction d'un débit de courant (18) de la modulation d'impulsions en durée de manière à faire coïncider ledit courant détecté avec une valeur de commande;
- produire une commande de référence de courant (17) en tant que forme d'onde de commande de courant optimale avec un retard primaire depuis zéro jusqu'à une valeur de commande de courant prédéterminée pendant ladite première période;
- calculer ledit débit de courant de la modulation d'impulsions en durée pendant ladite première période en fonction d'un débit initial de courant (151) pendant ladite première période, mémorisé dans un élément de mémoire pouvant être lu et enregistré, de manière à faire circuler un courant pour qu'il coïncide avec ladite commande de référence de courant; et
- modifier le débit de courant initial en fonction d'une différence entre ledit courant détecté et ladite commande de référence de courant, produire un débit de courant nécessaire de la modulation d'impulsions en durée pendant ladite seconde période en fonction de l'écoulement du temps après ladite première période.
